(19) **Europäisches Patentamt European Patent Office Office européen des brevets**

(11) **EP 2 959 976 B1**

(12) **FASCICULE DE BREVET EUROPEEN**

(45) Date de publication et mention de la délivrance du brevet:
**05.04.2017 Bulletin 2017/14**

(51) Int Cl.:
***B03B 9/06*** *(2006.01)*

(21) Numéro de dépôt: **15173513.1**

(22) Date de dépôt: **24.06.2015**

(54) **DISPOSITIF ET PROCÉDÉ DE RECYCLAGE PAR PUISSANCE PULSÉE DE MATÉRIAUX COMPOSITES À RENFORTS ET MATRICE**

VORRICHTUNG UND VERFAHREN ZUM RECYCELN DURCH GEPULSTE HOCHSPANNUNGSBEHANDLUNG VON VERBUNDMATERIALIEN MIT VERSTÄRKUNGEN UND MATRIX

DEVICE AND METHOD OF RECYCLING COMPOSITE MATERIALS WITH REINFORCEMENTS AND MATRIX THROUGH PULSE POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2014 FR 1456089**

(43) Date de publication de la demande:
**30.12.2015 Bulletin 2015/53**

(73) Titulaire: **Camille Compagnie d'Assistance Minière et Industrielle**
**95310 Saint Ouen l'Aumone (FR)**

(72) Inventeurs:
• **BENTAJ, Abdelaziz**
  **92390 Villeneuve la Garenne (FR)**
• **DEMARET, Gauthier**
  **78112 Fourqueux (FR)**
• **BENTAJ, Mourad**
  **78580 Maule (FR)**

(74) Mandataire: **Regimbeau**
**20, rue de Chazelles**
**75847 Paris Cedex 17 (FR)**

(56) Documents cités:
**WO-A1-2009/135486    WO-A1-2013/168302**
**WO-A2-2005/056192    DE-A1-102008 062 350**

**Description**

DOMAINE DE L'INVENTION

La présente invention concerne de façon générale le recyclage des matériaux composites à base de renfort/matrice.

Elle propose en particulier un dispositif et un procédé de recyclage renfort/matrice par l'injection d'un fort courant pulsé à travers le composite et trouve avantageusement application pour le recyclage de matériaux composites à base de fibres de carbone.

ARRIERE-PLAN TECHNOLOGIQUE

On sait que les fibres de carbone ont des propriétés mécaniques particulièrement intéressantes, notamment en termes de résistance, de module d'Young et de densité. Elles sont de ce fait de plus en plus utilisées en aéronautique ou dans des domaines connexes (fabrication de pâles d'éoliennes de grande envergure et de faible poids, par exemple) ou encore pour la fabrication de matériels sportifs.

La capacité mondiale de production de fibres de carbone a été de 111 785 tonnes en 2012. Elle atteindra 156 845 t en 2016 et 169 300 t en 2020. Par rapport à ces capacités nominales, la production réelle ne représente qu'une partie, évaluée à 60% en 2012, 68% en 2016 et 72% en 2020. La demande quant à elle a été de 47 220 t en 2012. Elle devrait atteindre 74 740 t en 2016 et 102 460 t en 2020. Cette situation de surcapacité pourrait contribuer à maintenir des prix compétitifs. Les matrices des composites à fibres de carbone sont à 72% des époxies (Source : Consortium PlusComposites).

En 2012, la demande provient à 16% de l'aéronautique, à 62% de l'industrie, le reste des autres secteurs (consommation).

Le recyclage des fibres de carbone devient par conséquent désormais un enjeu majeur.

Le matériau composite dispose d'atouts que les éléments seuls ne possèdent pas : résistance, légèreté, isolation thermique, nouvelles propriétés chimiques, mécaniques, etc.

Ces performances résultent bien entendu des natures des matériaux de base (renfort, matrice et de leur compatibilité.) Ce produit s'adapte aux innovations et permet de créer de nouveaux marchés.

Les matériaux composites sont ainsi composés d'un renfort et d'une matrice.

Le renfort permet la tenue mécanique du composite, cela peut être des fibres de carbone, des fibres de verre, kevlar, aluminium ou du titane.

La matrice généralement utilisée dans la fabrication du composite est une résine époxyde, on utilise aussi le carbone, polyester, le vinylester ou le polyamide. La matrice, thermodurcissable ou thermoplastique, permet de transférer les efforts au renfort, qui est plus rigide et résistant.

Dans l'aéronautique, des renforts de haute performance sont utilisés, avec des matrices également de haute performance.

Or, les principales techniques de recyclage / valorisation des matériaux composites connues à ce jour ne sont pas pleinement satisfaisantes.

En particulier, les techniques d'incinération ne permettent pas la récupération de matériaux ; elles génèrent des gaz toxiques et permettent au mieux une valorisation énergétique.

Les techniques de pyrolyse (traitement thermique des déchets, à température et pression contrôlées) et de solvolyse (eau, méthanol...) en conditions supercritiques permettent de dégrader les résines ou de les séparer des fibres. Elles restent toutefois particulièrement énergivores. De plus, les fibres sont dégradées en surface à partir de 500°C, et leurs propriétés mécaniques se retrouvent réduites.

Il a déjà été proposé par la demanderesse, notamment dans son brevet FR 2 942 149, un procédé de recyclage qui peut être utilisé pour différents types de matière composite et en particulier pour des fibres de carbone. Ce procédé met en oeuvre plusieurs étages de traitement successifs :

- un étage à effet indirect avec génération d'une onde de choc mécanique,
- un étage à effet direct avec un arc électrique, créant une impulsion électromagnétique qui traverse le bain dans lequel se trouve la matière à valoriser, et enfin
- un étage de séchage par micro-ondes.

Un autre dispositif de recyclage de matériaux composites de type à renforts et matrice est également décrit dans le document WO2009/135486 A1.

## PRESENTATION DE L'INVENTION

Un but général de l'invention est de proposer une technique de valorisation et de traitement des matériaux composites de type renfort/matrice (notamment - mais non limitativement de fibres de carbone), qui soit simple, fiable, peu polluante et peu consommatrice en termes d'énergie.

Elle propose à cet effet un dispositif de recyclage, qui comporte deux rails métalliques entre lesquels les matériaux composites à recycler sont destinés à être étendus et un générateur de courant dont les bornes sont reliées ou destinées à être reliées aux deux rails métalliques.

Lesdits rails constituent ainsi des électrodes en court-circuit lorsque les matériaux composites à traiter sont disposés sur lesdits rails.

Le générateur est adapté pour délivrer entre ces deux rails au moins une impulsion de courant d'une puissance de l'ordre de ou supérieure au MW, qui permette la séparation des renforts et de leur matrice.

L'invention propose en outre un procédé de recyclage utilisant un tel dispositif. Ce procédé comporte des étapes de :

i. positionnement d'une quantité de matériaux composites de type renfort/matrice à recycler entre les deux rails dudit dispositif,

ii. commande du générateur dudit dispositif pour qu'il délivre entre ces deux rails au moins une impulsion de courant d'une puissance de l'ordre de ou supérieure au MW, qui permette la séparation entre les renforts et leur matrice.

## BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1 est une représentation schématique d'un mode de réalisation possible pour un dispositif conforme à un mode de réalisation possible de l'invention ;

La figure 2 est une vue en coupe illustrant une disposition de fibres de carbone sur les rails formant électrodes du dispositif de la figure 1.

La figure 3 illustre un exemple d'impulsion de tension délivrée par le dispositif de la figure 1.

La figure 4 illustre différentes étapes d'une mise en oeuvre possible pour le procédé de l'invention.

La figure 5 illustre un exemple de système de mécanisation, permettant de traiter en continu des fibres à recycler.

Les figures 6a à 6c illustrent différentes étapes de fonctionnement du système de la figure 5.

## DESCRIPTION DETAILLE D'UN MODE DE REALISATION

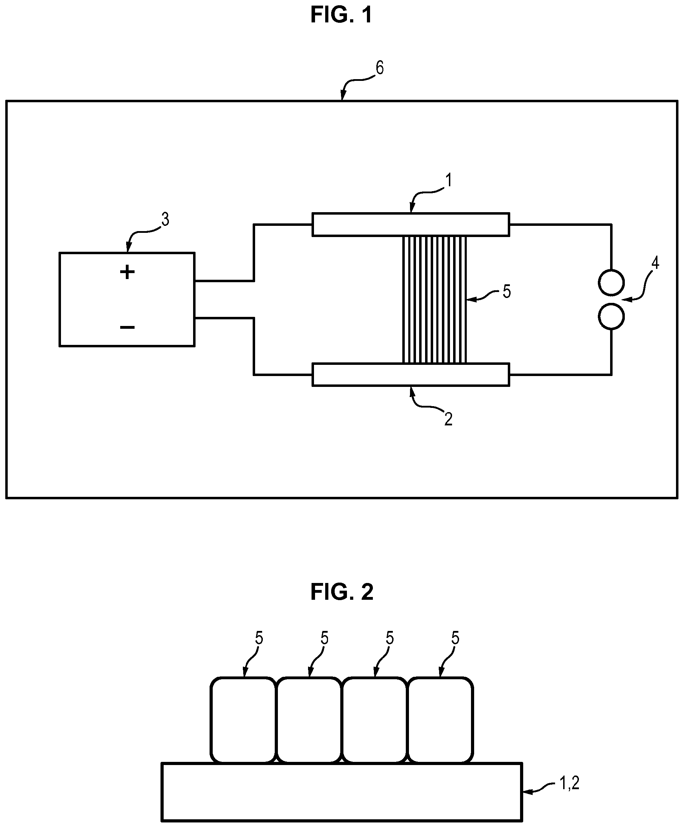

Le dispositif pour la valorisation illustré sur la figure 1 comprend deux rails métalliques 1 et 2 qui constituent deux électrodes, ainsi qu'un générateur de courant 3 qui est destiné à générer des impulsions de forte puissance entre ces deux rails 1 et 2.

Les deux rails 1 et 2 s'étendent à une certaine distance l'un de l'autre. Ils sont destinés à être court-circuités par les matériaux composites de type renfort/matrice à recycler, lesquels sont par exemple des fibres de carbone 5.

Lesdits rails 1 et 2 peuvent être droits et s'étendre parallèlement. Ils peuvent également s'étendre selon d'autres configurations, par exemple présenter différentes zones d'écartement différents afin de recevoir des longueurs de fibres/matériaux à recycler différentes.

Un éclateur 4 peut également être prévu entre les rails 1 et 2 pour sécuriser le dispositif.

L'écartement entre les deux électrodes 1 et 2 peut aller de quelques cm à 2m environ, les matériaux composites 5 pouvant être orientés dans n'importe quelle direction entre ces deux électrodes. Comme on l'aura compris, plus le courant pulsé traversant la fibre est important, plus la longueur de fibres (plus généralement de matériaux composites) qui peut être traitée peut être importante.

Des moyens de manipulation externes sont prévus pour permettre de poser les matériaux 5 à recycler sur les rails 1 et 2, peu important leur orientation sur ceux-ci.

Pour permettre d'effectuer des décharges de très fort courant, le générateur 3 comporte des capacités haute tension permettant un stockage de l'énergie électrique sans nécessiter une forte puissance d'alimentation. Un système de commutation rapide permet de délivrer l'énergie ainsi stockée.

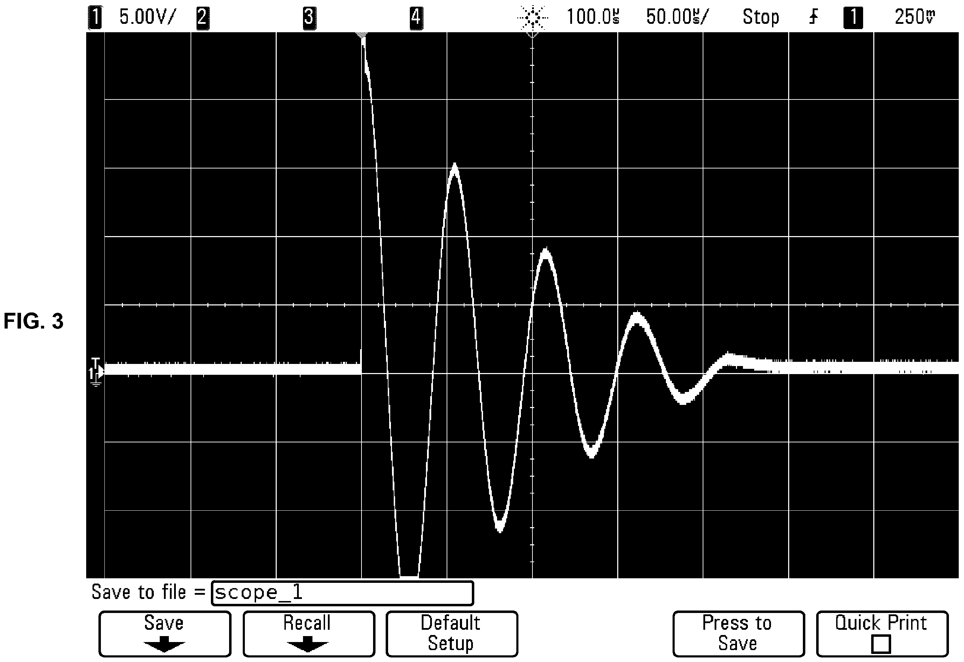

Le générateur de courant 3 génère des impulsions de courant, de polarité positive ou négative, de forme carrée, ou sinusoïdales amorties du type de celles représentées sur la figure 3.

Ces impulsions sont d'une puissance de l'ordre du MW, voire très supérieure (entre $10^6$ et $10^{14}$ W).

Elles correspondent par exemple à une tension maximale entre les électrodes 1 et 2 allant de 20kV à 200kV.

La durée moyenne d'une impulsion est d'environ 50μs.

La fréquence de la décharge (a priori sans grande influence sur le phénomène de séparation) est comprise entre 15 à 300kHz.

Le courant entre les rails 1 et 2 va de 10 à 100kA selon la configuration du générateur.

Par ailleurs, la quantité de matériaux composites 5 disposés sur les électrodes 1 et 2 et traités simultanément est adaptée pour permettre au traitement d'être aussi efficace que possible. Cette quantité et le courant traversant les matériaux à recycler sont fortement dépendants. Dans le cas de fibres composites, par exemple, la densité de courant dans les fibres 5 doit être de l'ordre de ou supérieure à $10^4 A/cm^2$ afin de séparer les fibres de leur résine avec une seule décharge. Plusieurs décharges sont nécessaires lorsque la densité de courant n'est pas suffisante.

Le courant a tendance à circuler en périphérie dû à l'effet de peau. Mais lorsque le courant devient trop important, la quantité de courant circulant au coeur de la fibre augmente. Expérimentalement, la séparation fibre/résine est observée lorsque le courant au centre de la fibre dépasse une certaine valeur. Tous les brins de la fibre sont alors traversés par le courant pulsé.

En croisant les résultats de séparation fibre/résine obtenus expérimentalement à la densité de courant au coeur de la fibre calculés par simulation avec le logiciel Quickfield™, on constate le ratio énergétique suivant :

| Densité de courant maximum Jmax Section = Largueur x Hauteur | Ratio Énergie dépensée / Séparation fibre-résine |
|---|---|
| Jmax > 1000 A/mm$^2$ | Très bon |
| 650 < Jmax < 1000 A/mm$^2$ | Bon |
| 300 < Jmax < 650 A/mm$^2$ | Moyen |
| 100 < Jmax < 300 A/mm$^2$ | Faible |
| Jmax < 100 A/mm$^2$ | / |

Pour une même section de fibre, plus le courant crête de la décharge est important, et meilleur est le résultat. En outre, il existe un seuil de densité de courant en dessous duquel le phénomène de séparation ne se reproduit plus, ou n'est pas obtenu de façon satisfaisante (en l'occurrence 300A/mm$^2$ pour des fibres de carbone).

Le phénomène de séparation se produit en fonction de la section de fibre à traiter, le nombre de décharges nécessaires à la séparation augmente ensuite proportionnellement à la longueur de fibre à traiter.

Dans le tableau ci-dessus, la densité de courant Jmax parcourant une section de fibre est calculée selon la formule suivante :

$$Jmax = \frac{Idecharge}{S}$$

- Jmax : Densité de courant (A/mm$^2$)
- I$_{decharge}$ : Courant crête (Ampère)
- S : Section (mm$^2$) = Largeur (mm) x Hauteur (mm), section conductrice connectée sur les électrodes 1 et 2.

La valeur de Jmax obtenue permet ainsi d'estimer la facilité de séparation fibre/résine, et de voir quel serait le courant pulsé nécessaire au traitement d'une section de fibre donnée.

On remarque que pour une quantité de fibre identique traitée, le bilan énergétique est meilleur lorsque la section est faible par rapport à la longueur.

On observe également expérimentalement que la séparation est améliorée lorsque la fibre est compactée, c'est-à-dire lorsque la largeur est proche de la hauteur (fibre de section carrée).

Le courant qui traverse les brins de fibres permet alors d'extraire la résine de la fibre carbone, les brins de fibres s'accrochant sur les électrodes 1 et 2 tandis que la résine elle-même est libérée et peut être récupérée.

Il est également prévu une enceinte de protection 6 en matière plastique isolante.

Cette enceinte 6 a plusieurs fonctions :

- protéger l'utilisateur compte tenu des hautes tensions appliquées au sein du dispositif ; il s'agit donc d'un élément de sécurité indispensable pour l'opérateur,
- permettre de récolter les dépôts de fibres car il est à noter que la résine vient se redéposer sur les parois de l'enceinte 6.

- utiliser un fluide newtonien ou non-newtonien lors du traitement, l'opération pouvant se dérouler dans un liquide ou sous gaz neutre par exemple.

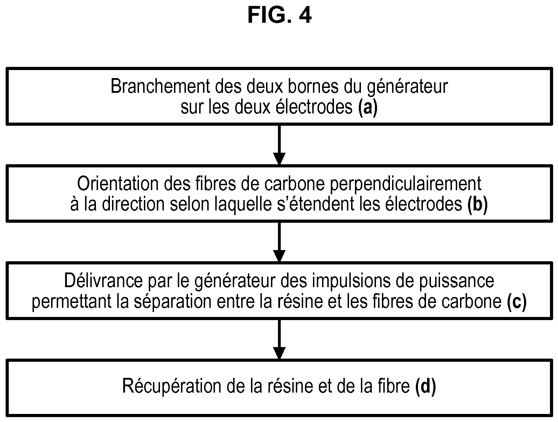

On a illustré sur la figure 4 différentes étapes d'un traitement de recyclage au moyen d'un dispositif du type de celui qui vient d'être décrit.

Dans une étape initiale (étape a) sur la figure 4, l'opérateur branche les deux bornes du générateur 3 sur les deux électrodes 1 et 2.

Il positionne, à l'aide de moyens de manipulation prévus à cet effet, les fibres de carbone 5, peu importe l'orientation prise par les fibres, entre les électrodes 1 et 2 pour qu'elles réalisent un court-circuit entre celles-ci (étape B). Une fois les fibres 5 positionnées, l'opérateur enclenche le générateur 3 qui se charge et délivre là où les impulsions de fort courant qui vont permettre la séparation entre la résine et les fibres de carbone (étape C).

Dans une dernière étape enfin, le procédé comprend finalement la récupération de la résine et de la fibre (étape D). Pour cela, l'opérateur récupère la résine projetée sur l'enceinte 6 après passage du courant électrique et récupère la fibre qui est restée accrochée sur les électrodes 1 et 2.

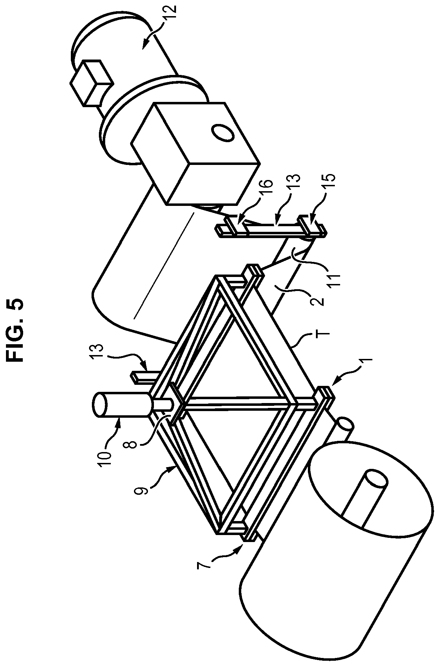

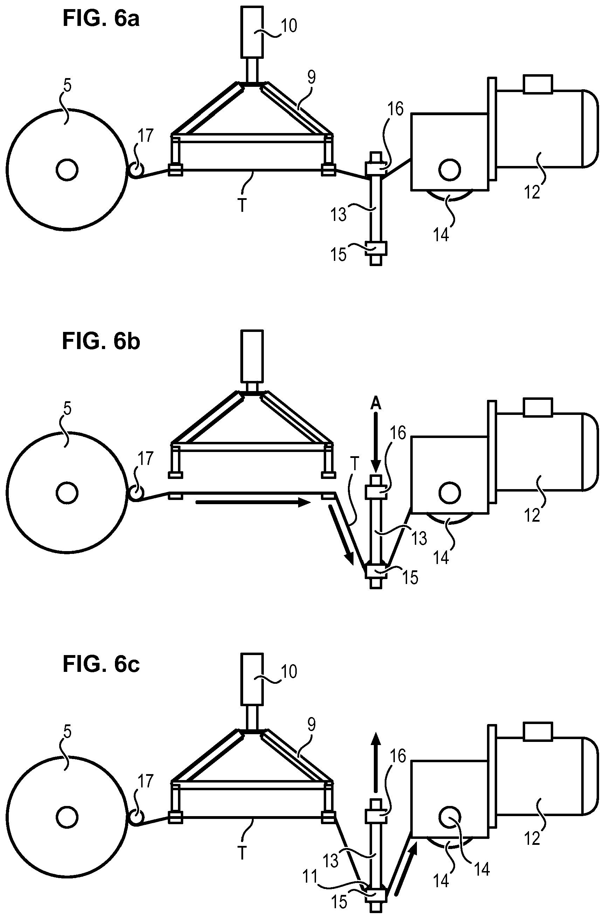

La figure 5 et les figures 6a à 6c illustrent un exemple de système mécanique qui peut être utilisé dans un dispositif du type de ceux envisagés en référence aux figures précédentes, pour traiter un rouleau de toile T de fibres de carbone 5 ou plus généralement de matériau composite à renforts et matrice.

Ce système intègre deux rails 1 et 2 destinés à former électrode, sur lesquels la toile du matériau à recycler est déroulée. Deux patins de bridage 7 et 8, complémentaires des rails 1 et 2, sont prévus pour se refermer sur ces deux rails 1 et 2 afin de maintenir la toile tendue entre les deux rails lors d'un traitement par arc électrique. Ces deux patins de bridage 7 et 8 sont à cet effet montés sur une structure support 9 elle-même montée sur un vérin 10. Ce vérin 10 est apte à être commandé pour refermer les patins de bridage 7 et 8 sur les rails 1 et 2 et ainsi brider la toile, ou au contraire pour remonter lesdits patins de bridage 7 et 8 par rapport aux rails 1 et 2 et libérer la toile T.

Le système comporte également, en sortie des rails 1 et 2, un rouleau de dévidage 11 et un motoréducteur 12. Le rouleau de dévidage 11 est monté entre deux guides 13 verticaux qui lui permettent de se dérouler, sous l'effet de son poids, entre une position haute et une position basse et ainsi d'entrainer la toile T lorsque les patins de bridage 7 et 8 sont remontés. Le motoréducteur 12 entraîne quant à lui un rouleau 14 sur lequel la toile T se rembobine, ce qui a alors pour effet de remonter le rouleau 11.

Le fonctionnement de ce système est le suivant.

Le rouleau de toile T est chargé, passé sur les rails 1 et 2, le rouleau de dévidage 11 et le rouleau 14, puis tendu. Le vérin 10 descend la structure 11 et referme les patins 7 et 8 sur les rails 1 et 2, afin de brider la toile T entre lesdits rails 1 et 2 (figure 6a).

Une ou plusieurs impulsions de courant sont alors générées entre les deux électrodes 1 et 2 afin de réaliser un recyclage de la toile T.

Après traitement, les patins 7 et 8 sont remontés. Le rouleau 11 se déroule alors et entraine par son poids la toile T. La bobine amont se dévide, un rouleau de frein 17 étant néanmoins prévu pour gagner une bonne tension de matière.

Lorsqu'il est détecté en position basse par le capteur 15, le vérin 10 descend la structure 11 et referme les patins 7 et 8 sur les rails 1 et 2. Le motoréducteur 12 est ensuite mis en route pour embobiner la toile T sur le rouleau 14. Il s'arrête lorsque le capteur 16 est activé alors que le rouleau 11 est revenu en position haute.

### Revendications

1. Dispositif de recyclage de matériaux composites de type à renforts et matrice (5), **caractérisé en ce qu'**il comporte deux rails métalliques (1, 2) entre lesquels les matériaux à recycler (5) sont destinées à être étendus, ainsi qu'un générateur de courant (3) dont les bornes sont reliées ou destinées à être reliées aux deux rails métalliques (1, 2), lesdits rails (1, 2) constituant ainsi des électrodes (1, 2) en court-circuit lorsque les matériaux à recycler (5) sont disposés sur lesdits rails (1, 2), ledit générateur (3) étant adapté pour délivrer entre ces deux rails (1, 2) au moins une impulsion de courant d'une puissance de l'ordre de ou supérieure au MW, qui permette la séparation entre les renforts et leur matrice.

2. Dispositif selon la revendication 1, **caractérisé en ce que** les rails (1,2) sont parallèles et/ou (1,2) présentent des zones d'écartement différents, adaptées pour recevoir des longueurs de matériaux à recycler différentes.

3. Dispositif selon la revendication 1, **caractérisé en ce que** l'écartement entre les deux rails (1, 2) est compris entre 10 cm et 2m.

**4.** Dispositif selon la revendication 1, **caractérisé en ce que** le générateur (3) est adapté pour générer des impulsions de courant de 10 à 100kA.

**5.** Dispositif selon la revendication 1, **caractérisé en ce que** le générateur est adapté pour générer entre les rails (1, 2) des impulsions d'une durée moyenne de l'ordre de $50\mu s$.

**6.** Dispositif selon la revendication 1, **caractérisé en ce qu'**il comporte une enceinte (6) en un matériau isolant pour la récupération de la matrice.

**7.** Dispositif selon la revendication 1, **caractérisé en ce qu'**il comporte un éclateur de sécurité (4) monté entre les deux rails (1, 2).

**8.** Dispositif selon la revendication 1, **caractérisé en ce qu'**il comporte un système mécanique adapté pour dérouler sur les rails constituant électrodes et rembobiner de façon automatique un rouleau de toile de matériau composite à recycler.

**9.** Procédé de recyclage de matériaux composites de type à renforts et matrice (5), **caractérisé en ce qu'**il est mis en oeuvre au moyen d'un dispositif selon l'une des revendications précédentes et comporte des étapes de :

i. positionnement d'une quantité de matériaux composites à recycler entre les deux rails (1, 2) dudit dispositif,
ii. commande du générateur dudit dispositif pour qu'il délivre entre ces deux rails (1, 2) au moins une impulsion de courant d'une puissance de l'ordre de ou supérieure au MW, qui permette la séparation entre les renforts et leur matrice.

**10.** Procédé de recyclage selon la revendication 9, **caractérisé en ce que** les matériaux à recycler sont des fibres de carbone.

**11.** Procédé de recyclage selon la revendication 9, **caractérisé en ce que** le courant de crête génère une densité de courant dans les fibres supérieure à 300A/mm$^2$.

**12.** Procédé selon la revendication 9, **caractérisé en ce qu'**on déroule sur les rails constituant électrodes et on rembobine de façon automatique un rouleau de toile de matériau composite à recycler.

**Patentansprüche**

**1.** Vorrichtung zum Recyceln von Verbundwerkstoffen von der Art mit Verstärkung und Matrix (5), **dadurch gekennzeichnet, dass** sie zwei Metallschienen (1, 2) enthält, zwischen denen die Werkstoffe, die recycelt werden sollen, (5) gestreckt werden sollen, sowie einen Stromgenerator (3), dessen Klemmen mit den beiden Metallschienen (1, 2) verbunden sind oder verbunden werden sollen, wobei die Schienen (1, 2), somit Elektroden (1, 2) im Kurzschluss bilden, wenn die Werkstoffe, die recycelt werden sollen, (5) auf den Schienen (1, 2) angeordnet sind, wobei der Generator (3) angepasst ist, um zwischen diesen beiden Schienen (1, 2) mindestens einen Stromimpuls mit einer Leistung in der Größenordnung von oder größer als MW abzugeben, der die Trennung zwischen den Verstärkungen und ihrer Matrix ermöglichen.

**2.** Vorrichtung nach Anspruch 1, **dadurch gekennzeichnet, dass** die Schienen (1, 2) parallel sind und/oder (1, 2) unterschiedliche angepasste Abstandsbereiche haben, um verschiedene Werkstofflängen aufzunehmen, die recycelt werden sollen.

**3.** Vorrichtung nach Anspruch 1, **dadurch gekennzeichnet, dass** der Abstand zwischen den beiden Schienen (1, 2) zwischen 10 cm und 2 m beträgt.

**4.** Vorrichtung nach Anspruch 1, **dadurch gekennzeichnet, dass** der Generator (3) angepasst ist, um Stromimpulse von 10 bis 100 kA zu erzeugen.

**5.** Vorrichtung nach Anspruch 1, **dadurch gekennzeichnet, dass** der Generator angepasst ist, um zwischen den Schienen (1, 2) Impulse mit einer durchschnittlichen Dauer von ca. 50 $\mu s$ zu erzeugen.

**6.** Vorrichtung nach Anspruch 1, **dadurch gekennzeichnet, dass** sie ein Gehäuse (6) aus isolierendem Material für die Wiederherstellung der Matrix umfasst.

**7.** Vorrichtung nach Anspruch 1, **dadurch gekennzeichnet, dass** sie eine zwischen die beiden Schienen (1, 2) montierte Sicherheitsfunkenstrecke (4) umfasst.

**8.** Vorrichtung nach Anspruch 1, **dadurch gekennzeichnet, dass** sie ein mechanisches System umfasst, das geeignet ist, auf den Elektroden bildenden Schienen eine Tuchrolle aus Verbundwerkstoff auszurollen und automatisch wieder aufzurollen, der recycelt werden soll.

**9.** Verfahren zum Recyceln von Verbundwerkstoffen von der Art mit Verstärkung und Matrix (5), **dadurch gekennzeichnet, dass** es vermittels einer Vorrichtung nach einem der vorstehenden Ansprüche eingesetzt wird und folgende Schritte umfasst:

i. Positionierung einer Menge von Verbundwerkstoffen, die recycelt werden sollen, zwischen den beiden Schienen (1, 2) der Vorrichtung,
ii. Steuerung des Generators der Vorrichtung, damit er zwischen diesen beiden Schienen (1, 2) zumindest einen Stromimpuls mit einer Leistung in der Größenordnung von oder größer als der MW abgibt, der die Trennung zwischen den Verstärkungen und ihrer Matrix ermöglicht.

**10.** Recyclingverfahren nach Anspruch 9, **dadurch gekennzeichnet, dass** die Werkstoffe, die recycelt werden sollen, Kohlenstofffasern sind.

**11.** Recyclingverfahren nach Anspruch 9, **dadurch gekennzeichnet, dass** der Spitzenstrom eine Stromdichte in den Fasern von über 300 A/mm$^2$ erzeugt.

**12.** Verfahren nach Anspruch 9, **dadurch gekennzeichnet, dass** auf den Elektroden bildenden Schienen eine Tuchrolle aus Verbundwerkstoff ausgerollt und automatisch wieder aufgerollt wird, der recycelt werden soll.

**Claims**

**1.** A device for recycling composite materials of reinforcement and matrix type (5), **characterized in that** it includes two metal rails (1, 2) between which the materials to be recycled (5) are intended to be stretched, and a current generator (3), the terminals of which are connected or intended to be connected to the two metal rails (1, 2), said rails (1, 2) thus forming electrodes (1, 2) in short circuit when the materials to be recycled (5) are arranged on said rails (1, 2), said generator (3) being suitable for outputting at least one current pulse of a power in the order of or greater than the MW between these two rails (1, 2), which allows the separation of the reinforcements from their matrix.

**2.** The device according to claim 1, **characterized in that** the rails (1, 2) are parallel and/or have areas of different spacing, adapted to receive different lengths of materials to be recycled.

**3.** The device according to claim 1, **characterized in that** the spacing between the two rails (1, 2) is between 10 cm and 2 m.

**4.** The device according to claim 1, **characterized in that** the generator (3) is suitable for generating current pulses of 10 to 100kA.

**5.** The device according to claim 1, **characterized in that** the generator is suitable for generating pulses of a mean duration in the order of 50μs between the rails (1, 2).

**6.** The device according to claim 1, **characterized in that** it includes an enclosure (6) made of an insulating material for recovering the matrix.

**7.** The device according to claim 1, **characterized in that** it includes a safety spark-gap (4) mounted between the two rails (1, 2).

**8.** The device according to claim 1, **characterized in that** it includes a mechanical system suitable for unrolling on the electrode-forming rails and automatically winds back a roll of composite-material web to be recycled.

9.  A method for recycling composite materials of reinforcement and matrix type (5), **characterized in that** it is implemented by means of a device according to one of the preceding claims and includes steps of:

    i. placing a quantity of composite materials to be recycled between the two rails (1, 2) of said device,
    ii. controlling the generator of said device so that it outputs at least one current pulse of a power in the order of or greater than the MW between these two rails (1, 2), which allows the separation of the reinforcements from their matrix.

10.  The recycling method according to claim 9, **characterized in that** the materials to be recycled are carbon fibers.

11.  The recycling method according to claim 9, **characterized in that** the peak current generates a current density in the fibers greater than 300A/mm$^2$.

12.  The recycling method according to claim 9, **characterized in that** a roll of composite-material web to be recycled is unwound on the electrode-forming rails and wound back automatically.

**FIG. 1**

**FIG. 2**

FIG. 3

# FIG. 4

Branchement des deux bornes du générateur
sur les deux électrodes **(a)**

↓

Orientation des fibres de carbone perpendiculairement
à la direction selon laquelle s'étendent les électrodes **(b)**

↓

Délivrance par le générateur des impulsions de puissance
permettant la séparation entre la résine et les fibres de carbone **(c)**

↓

Récupération de la résine et de la fibre **(d)**

FIG. 5

**FIG. 6a**

**FIG. 6b**

**FIG. 6c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2942149

- WO 2009135486 A1